# EUROPEAN PATENT SPECIFICATION

(11) **EP 1 616 255 B1**
(45) Date of publication and mention of the grant of the patent: **01.08.2007**
(21) Application number: 04721909.2
(22) Date of filing: 19.03.2004
(51) Int. Cl.: G06F 9/44

(54) **METHOD AND APPARATUS FOR WEAVING ASPECTS INTO A CHANGING BASE SYSTEM**
VERFAHREN UND VORRICHTUNG ZUM EINBINDEN VON ASPEKTEN IN EIN SICH ÄNDERNDES BASISSYSTEM
PROCEDE ET APPAREIL DE TISSAGE D'ASPECTS DANS UN SYSTEME DE BASE CHANGEANT

(43) Date of publication of application: 18.01.2006
(73) Proprietor: NTT DoCoMo, Inc., Tokyo (JP); Universität Duisburg-Essen, 45141 Essen (DE)
(72) Inventor: HIRSCHFELD, Robert, 98693 Ilmenau (DE); KAWAMURA, Katsuya, 82031 Grünwald (DE); HANENBERG, Stefan, 45141 Essen (DE)
(74) Representative: Betten & Resch
(86) International application number: PCT/EP2004/050337
(87) International publication number: WO 2005/096146

(56) References cited:
- WO-A-96/07137
- KICZALES G ET AL: "Aspect-oriented programming" ECOOP '97 - OBJECT-ORIENTED PROGRAMMING. 11TH EUROPEAN CONFERENCE PROCEEDINGS SPRINGER-VERLAG BERLIN, GERMANY, June 1997 (1997-06), pages 220-242, XP008004335 ISBN: 3-540-63089-9 cited in the application
- HIRSCHFELD R: "AspectS - aspect-oriented programming with Squeak" OBJECTS, COMPONENTS, ARCHITECTURES, SERVICES, AND APPLICATIONS FOR A NETWORKED WORLD. INTERNATIONAL CONFERENCE, NETOBJECTDAYS, NODE 2002. REVISED PAPERS (LECTURE NOTES IN COMPUTER SCIENCE VOL.2591) SPRINGER-VERLAG BERLIN, GERMANY, 2003, pages 216-232, XP002318871 ISBN: 3-540-00737-7 cited in the application

## Description

### FIELD OF THE INVENTION

The present invention is directed to Aspect-Oriented Programming (AOP), and in particular to a method and an apparatus for weaving aspects into a base system which may undergo changes.

### BACKGROUND OF THE INVENTION

The present invention is related to the field of Aspect-Oriented Programming (AOP). AOP uses a new modularity structure, so called "aspects".
An aspect implements a concern that cross-cuts the primary modularization of a software system. An aspect-oriented programming language or system extends traditional programming languages and systems with constructs for programming aspects of systems. Such constructs can localize the implementation of cross-cutting concerns in a small number of special program modules, rather than spreading the implementation of such concerns throughout the primary program modules.

In order to capture the cross-cutting nature of aspects, such special program modules break the traditional rules of encapsulation in principled ways. They can affect the implementation of the primary modules without the explicit consent of those primary modules; further, they can do that for several primary modules simultaneously.

Aspect oriented programming (AOP) extends the expressive facilities available to the program, so that many design decisions can be expressed locally. The AOP programmer writes the base program in a traditional programming language, and also writes pieces of aspect code, each of which affects executions that are described in some parts of the base program.

In such a manner, aspect code can realize the implementation of some design elements in a few modules, rather than spreading the fields and methods of those patterns throughout the classes. It can then e.g. capture the tracing, debugging and instrumentation support for a complex system in a few modules, capture error handling protocols involving several classes in a single module, and capture resource sharing algorithms involving several classes in a single module, rather than as multiple code fragments tangled throughout the classes.

The special program modules for programming aspects enable this by cross-cutting the modularity of more traditional modularity constructs such as classes in principled ways. So one of those special program modules can affect the implementation of several classes (or several methods within a single class) in a clean, principled way. Aspect-Object interaction differs from Object-Object interaction and other traditional programming paradigms in that with the traditional approaches, all behaviours of the objects are encapsulated in the objects themselves, either as a direct implementation in the object class definition, as a request encoded in the object class definition to use the behaviours of other objects (e.g., a method call), or as a request in the object class definition to reuse the implementations of other object classes (e.g., through inheritance). Thus, in these traditional approaches, all control of an object's behaviour lies with the object itself. In the AOP environment, on the other hand, a part of the object's behaviour can be defined in an aspect outside of the object without the object having to request the behaviour in any way. Thus, it can be said that a part of the object's behaviour is transparently forced on the object by the aspect. Moreover, aspects have a more global effect in that one aspect can force its behaviour on multiple objects, possibly of different classes.

*An introduction into Aspect-Oriented Programming* (AOP) is e.g. given in Kiczales, G.; Lamping, J.; Mendhekar, A.; Maeda, C.; Lopes, C.; Loingtier, J.-M.; Irwing, J.: Aspect-Oriented Programming. In: Proceedings of European Conference on Object-Oriented Programming (ECOOP), LNCS 1241, Springer-Verlag, 1996, pp. 220-242. AOP deals with code fragments which logically belong to certain concerns but which cannot be modularized due to limited composition mechanisms of underlying programming languages and environments. The resulting code is *tangled* and *scattered.* Concerns that cause such tangling are called *crosscutting concerns.* Aspect-orientation is about modularizing crosscutting concerns into distinct modules, called *aspects.*

The mechanism for integrating aspect modules with an application is called *weaving.* A weaver is responsible for adding all aspects to the application. In order to specify such an integration, aspect-orientation makes use of a concept called *join point.* In Kiczales et al. (see above) join points are introduced as principled points in the execution of a program. A typical example of a join point is a method call.

Conventionally, the weaving process is started by the developer at a certain point in time and for a number of aspects to be integrated. Thereto, the weaving process determines and adapts all locations in the base system which represent join points at runtime where potentially or for sure aspect-specific code needs to be executed. Adapted locations that represent join points during runtime are called *join point shadows.* Adapting a join point shadow means that some amendment is performed which enables the invocation or execution of advice code when a join point shadow is reached. This can be done be inserting actually some code ("advice code") to be executed at this position, or it can be done by using a "wrapper" which makes the wrapped method behave such that the "advice" given by the aspect is considered or executed. Such an "adaptation" of join points into join point shadows is performed by the weaving process.

An aspect itself consists of an association of advice code to be executed and a set of join point descriptions which describe join points in a base system (the system without aspects) as those points in the base system at which the advice code should be executed. The set of join point descriptions may be referred to as "pointcut". The weaving process which may be regarded as a specific kind of compilation process then amends the base system such that the execution of advice code is enabled once a join point associated therewith is reached. This is sometimes referred to as weaving an aspect into the base system, or also as "installing an aspect" or "installing an advice". The locations for which during runtime the execution of aspect-specific code has been enabled by the weaver are referred to as join point shadows. By weaving an aspect into a base system the weaving process enables the invocation of advice code at the join point shadows.

Conventionally the weaving process does not take into account that the base system into which the aspects are to be woven in may change. In a conventional approach to weaving the set of join point shadows associated with a woven aspect is determined once at a certain moment of time (at the time of weaving the aspect) and with a certain configuration of the base system, and then remains the same for the aspect's and the base system's lifetime. This means that after weaving, all shadows in the application where aspect-specific code might be executed are adapted for the base system with its specific configuration it had at the time the aspect has been woven into the base system, without taking into account any possible change in the base system.

It is therefore an object of the present invention to provide a method and an apparatus which is suitable for aspect-oriented programming environments and which is capable to deal with dynamic changes in the base system into which one or more aspects are to be woven in.

WO 96/07137 discloses a method for adapting to changes in a base system in a programming environment consisting of a compilation unit having a plurality of source code modules. In response to a change in the base system each of these changes is classified as either a compatible change or an incompatible change. If an incompatible change is found to be a change that requires a recompilation of the compilation unit a recompilation is enabled by the method.

### SUMMARY OF THE INVENTION

The present invention is defined in the independent claims. The dependent claims define embodiments of the invention According to one embodiment of the invention there is provided a method for adapting to changes in a base system in an aspect oriented programming environment comprising an aspect system for implementing aspects to be woven into said base system using a weaver, said method comprising: in response to a change in said base system, evaluating the relevance of said change in said base system, and if said evaluation said system change is found to be relevant, taking an adaptive action to compensate for said system change.

By evaluating a system change and, if necessary, taking adaptive action the composed system of aspects and the underlying base system can react flexible to any changes in the base system. Thereby a change in the base system (modification, addition or removal of elements) can be compensated such that any inconsistency between the aspect and the base system which may arise from the base system change is compensated/addressed.

According to one embodiment the evaluation of the relevance comprises determining whether after a change in the base system the join points or join point shadows before the change in the base system are different from those after the change in the base system. Thereby it can be determined whether after a system change in the base system the join points or join point shadows in the composed system resulting from the aspects being woven into the base system before the system change are different from those which would result from a weaving process which would be carried out for the amended base system. This can e. g. be done by comparing the pointcuts for aspects and advices before and after the system change, and if they do differ, then the change is found to be relevant. The comparison can be made by directly comparing the pointcuts or the sets of join points or join point shadows before and after the system change. According to one embodiment the two sets my be compared by merely comparing the number of their set members and by deciding that there is a relevant change if the number differs. According to another embodiment the comparison can be made by comparing the set members individually, i.e. all join points or join point shadows before the system change with the ones after the system change, and if in this individual comparison a difference is found, then it is determined that a relevant change in the base system has occurred.

According to one embodiment said aspect oriented programming environment comprises in addition to said base system and said aspect system an adaptation system, whereas said adaptation system, said base system and said aspect system are separate entities which can be amended and executed independent of each other. This allows for great flexibility in the aspect system as well as in the adaptation system so that the overall system can be designed more flexible as well.

According to one embodiment said base system, said aspect system and said adaptation system interact through direct or indirect calls, such as e.g. function calls, method calls, sending messages, or the like. This makes these three parts of the overall system independent from each other.

According to one embodiment an adaptive action comprises one or more of the following: fully or partially re-weaving said aspect into said base system; full or partially re-weaving an advice associated with said aspect; fully or partially unweaving said aspect; fully or partially unweaving of an advice associated with said aspect.

According to an embodiment of the invention the method comprises: in case of a change in the base system, notifying an element of the overall system comprising the base system and the aspects about a change in the base system, said element being capable of one or more of the following:
initiating the evaluation of the base system change;
evaluating the base system change;
initiating an adaptive action based on said evaluation;
carrying out an adaptive action based on said evaluation.

The notification of the system element makes sure that appropriate action will be taken after evaluating the system change. The notified system element may be an element separated from the base system and the aspects/advices. It may be entrusted with receiving the notification about a system change and then initiating an evaluation of this change. The system element may be designed such that it carries out the evaluation itself, or it may trigger or cause another element to carry out the evaluation thereby initiating the evaluation.

Based on the evaluation the system element may then either itself carry out the adaptive action which is necessary in view of the evaluation result, or it may initiate that such action is taken, possibly by any other system component. For that purpose the system element may send a message to any other system component to trigger the adaptive action which the system element has - in view of the evaluation result- been found as necessary to be taken.

The system element responsible for receiving the system change and for the either initiating and/or carrying out the evaluation and for initiating and/or carrying out the adaptive action may be one of the following: an aspect; an advice; a pointcut, a weaver; or any other (separate) element for evaluating the notification and initiating the adaptive action.

According to an embodiment the notification of said element about a change in the base system comprises: automatically notifying said element in case of a change in the base system by sending a corresponding notification to said element; and/or polling said base system by said element to observe said base system as to whether any change in the base system occurs.

According to one embodiment one ore more elements of the aspect system, such as advices, pointcuts, or aspects themselves, register for being notified about any changes in the base system. This makes sure that those aspects, advices or pointcuts which have registered will be informed about a system change. The registration mechanisms allows an efficient notification by not informing system elements which have not registered for receiving such a notification.

According to an embodiment said evaluation comprises: determining a set of all join points and/or join point shadows for a certain aspect after said system change. This allows to check the relevance of the system change for a certain aspect or advice.

According to an embodiment the method further comprises: comparing said set of join points and/or join point shadows determined after said system change with a corresponding set before said system change, and if said sets differ, taking an adaptive action to compensate for said system change. This gives the possibility to suitably choose one of a pool of possible adaptive actions depending on the result of this comparison. This makes it possible to examine whether all join point shadows which are to be instrumented after a system change actually are instrumented or not. Depending on the result one of a plurality of possible adaptive actions may then be chosen. By taking an adaptive action only in connection with an aspect or advice for which the evaluation has been found relevant the adaptive action can be carried out efficiently, i.e. by only re-weaving or un-weaving those aspects for which the evaluation found that an adaptive action is necessary.

According to one embodiment the invention comprises: evaluating a set of rules according to which it is decided based on said evaluation result which of said adaptive actions is to be taken. This makes sure that the evaluation result is taken into account properly and that the adaptive action suitable for the particular system change will be chosen. The rules may also take into account events or conditions which occur during runtime, e.g. user interaction or the evaluation of any function or module.

According to an embodiment said base system change comprises one or more of the following: addition, removal or modification of an element of the base system.

According to an embodiment there is provided a computer program comprising computer executable code for carrying out a method according to one of the embodiments of the invention.

According to a further embodiment there is provided an apparatus for adapting to changes in a base system in an aspect oriented programming environment comprising an aspect system for implementing aspects to be woven into said base system using a weaver, said apparatus comprising:
means for in response to a change in said base system, evaluating the relevance of said change in said base system, and
means for if said evaluation said system change is found to be relevant, taking an adaptive action to compensate for said system change.

Such an apparatus may be implemented in software or in hardware or as a combination of both. According to further embodiments it may comprise means for implementing the features which have been defined with methods according to embodiments of the invention. Such means may be implemented in software, in hardware, or as a combination of both.

### BRIEF DESCRIPTION OF THE DRAWINGS

Fig. 1 A schematically illustrates the composition of aspects and a base system using a weaver according to the prior art.
Fig. 1 B schematically illustrates the problems which may arise in case of a system change for prior art systems.
Fig. 2 schematically illustrates a method according to an embodiment of the present invention.
Fig. 3 schematically illustrates a method according to a further embodiment of the present invention.
Fig. 4 schematically illustrates a basic configuration for implementing a notification according to an embodiment of the invention.
Fig. 5 schematically illustrates a further method according to an embodiment of the present invention.
Figures 6A to 6D illustrate schematically a system according to a further embodiment of the present invention.
Fig. 7 shows an exemplary example of a program code for implementing an embodiment according to the present invention.
Fig. 8 schematically illustrates a system according to an embodiment of the present invention.
Fig. 9 schematically illustrates method according to a further embodiment of the present invention.

### DETAILED DESCRIPTION

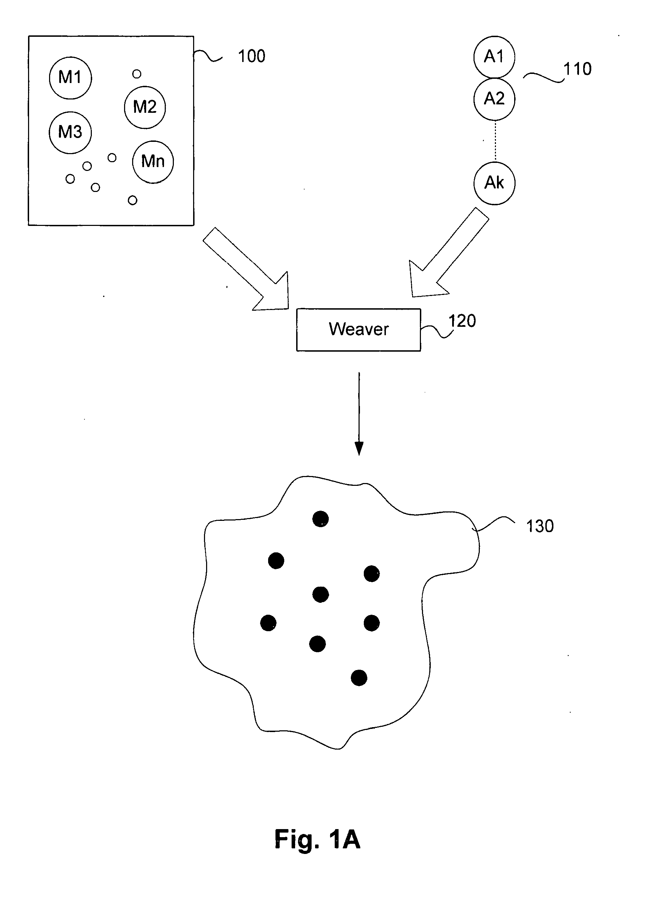

Fig. 1 A illustrates schematically a base system 100 which comprises individual modules M1, M2, M3, ..., Mₙ. The modules can be software modules, hardware modules associated with specific software modules (e.g. drivers of some hardware), or the like. For example, in case of a network the elements M1 to Mₙ may reflect the individual hardware components of a network, such as terminals, routers, switches, their corresponding driver components, or the like. However, the elements may also represent software components, e.g. components representing or enabling certain functionalities of the overall system, a specific functionality provided to a user, or anything alike.

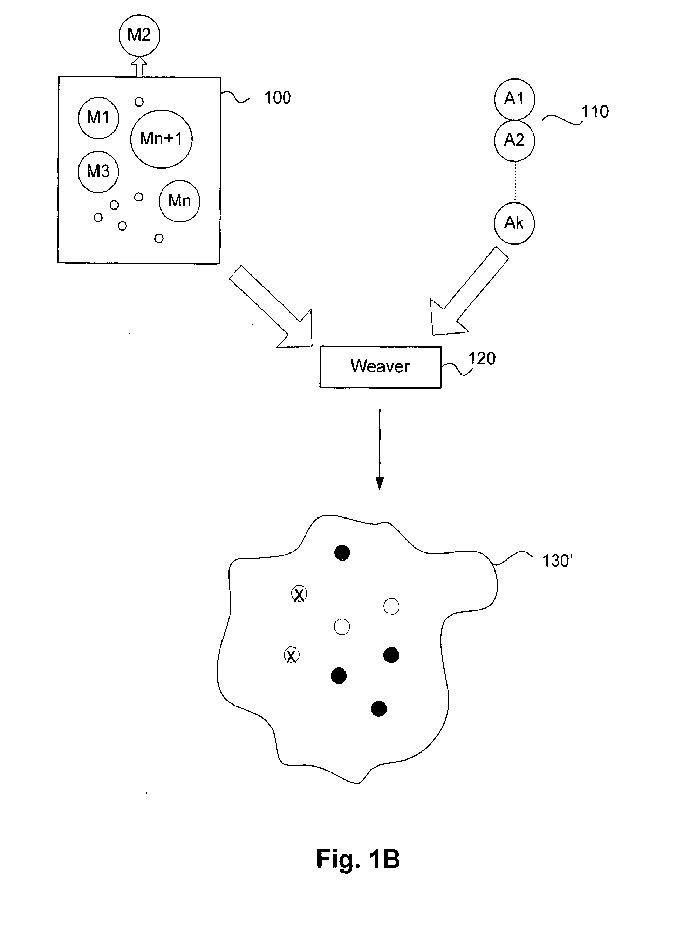

On the right-hand side of Fig. 1 A aspects A1 to Aₖ are schematically illustrated as circles 110. The term "Aspects" here has to be understood as referring to aspects as used in an aspect oriented programming environment, i.e. as specific type of modules which are used to implement crosscutting concerns in the base system. For this purpose these aspects are woven into the base system 100 by the weaver 120 to yield a runtime structure of the base system schematically shown as cloud 130 where at specific join point shadows, the so-called adapted joint point shadows which are shown in Fig. 1A as dots, advice code associated with one or more of the aspects A1 to Aₖ may be invoked. The joint point shadows to be adapted depend on the pointcuts (descriptions of the join points in the base system 100) which are respectively associated with the aspects A1 to Aₖ and which imply the set of joint point shadows to be adapted in the base system 100. By describing the join point shadows to be adapted the pointcut enables the weaver to amend the base system such that at so-called adapted join point shadows advice code may be invoked to implement the crosscutting concerns in the base system. This results then in the resulting composed system 130 (the system after the weaving) in Fig. 1A which is schematically illustrated as a cloud 130 in which the adapted join point shadows are indicated as dots. In order to illustrate what happens if the base system 100 changes we now refer to Fig. 1 B.

In case of Fig. 1 B one of the elements of the base system 100, namely element M2, has been removed from the base system. This may reflect the deinstallation of a certain software module or a certain hardware element, such as a terminal in a network, or anything alike. Moreover, a (new) module Mₙ₊₁ has been added to the base system 100 in Fig. 1 B.

One should note now that the individual aspects A1 to Aₖ respectively refer to joint points (that implies the corresponding join point shadows) in the base system through their respective pointcuts. However, the removal of module M2 may now lead to the fact that some of these joint points actually do not exist anymore in the base system because the module in which they existed has been removed. If this is the case, then the runtime structure 130 of Fig. 1A contains adapted joint point shadows which reflect elements in the base system which actually do not exist anymore (in this example module M2). This is schematically illustrated in Fig. 1 B by the adapted joint point shadows which are crossed out in the runtime system 130'. These join point shadows became superfluous by the fact that the module in the base system to which they correspond (module M2) has been removed from the base system.

Moreover, the addition of new module Mₙ₊₁ into the base system 100 leads to the fact that the aspects A1 to Aₖ correspond to a runtime structure 130' that should actually contain additional adapted joint point shadows corresponding to newly added module Mₙ₊₁ which, however, actually are not present because at the time of weaving the module Mₙ₊₁ has not been present in the base system so that the join point shadows corresponding to this module have not been adapted at the time of weaving. This is schematically illustrated by the empty circles in element 130' in Fig. 1 B. This means that the woven system which has been composed at a certain point of time does not reflect anymore correctly the actual base system and its corresponding aspects with their corresponding join points and join point shadows once a system change has happened in the base system. This may lead to inconsistencies or errors in the execution and the operation of the whole system.

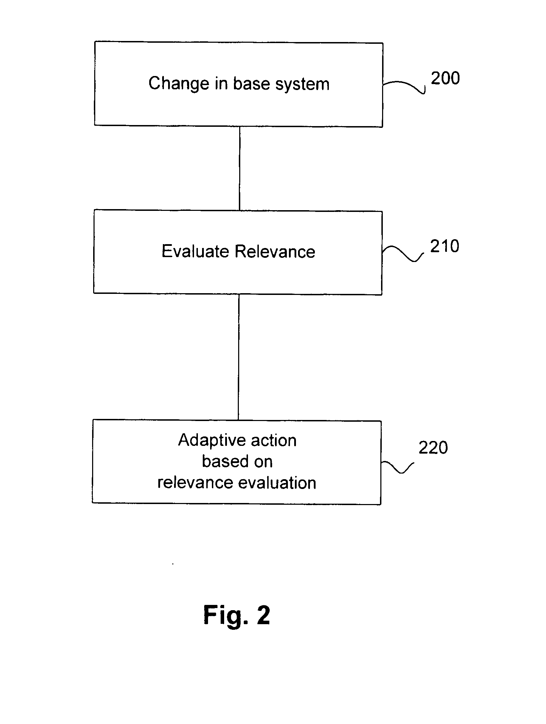

In order to overcome this deficiency there is provided one embodiment of the present invention as now illustrated in connection with Fig. 2. Fig. 2 shows a flowchart illustrating a method according to an embodiment of the present invention. In step 200 any change in the base system may occur, i.e. a change as illustrated in connection with Figs. 1A and 1B. Based on such a change, in step 210 the relevance of this change for one or more aspects which have been woven into the base system is evaluated. Then, thereafter in step 220 an adaptive action is taken in order to adapt to the system changes according to the relevance of the system change as evaluated in step 210.

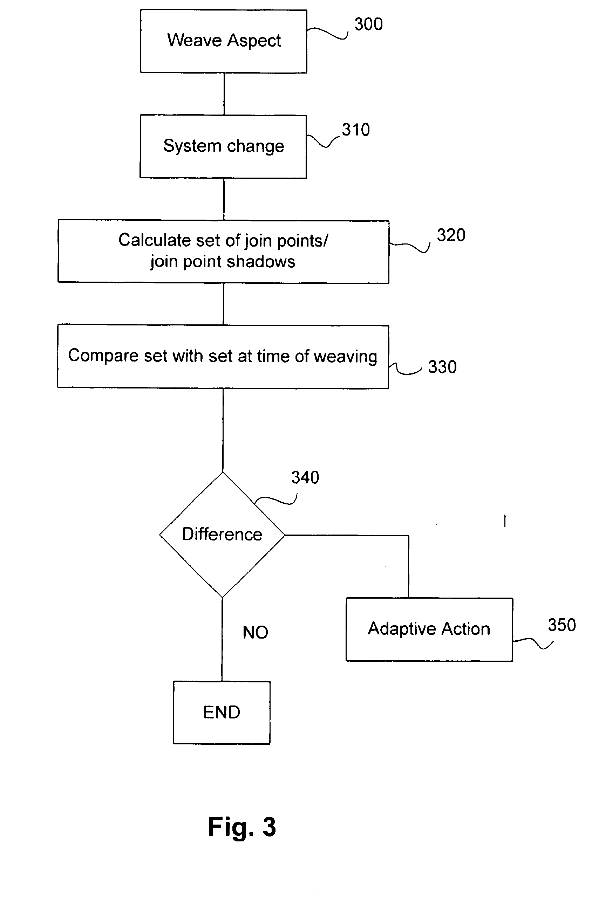

Operation 210 to evaluate the relevance of a system change in the base system may for example consist in an evaluation as to whether for a certain aspect and its point cut (or its join point descriptions) there is a change in the referred joint points/join point shadows which should be instrumented by this aspect after the system change. This can be done as further explained now in connection with Fig. 3.

Fig. 3 schematically illustrates a flowchart according to a further embodiment of the present invention. In Fig. 3 a certain aspect is woven into a base system at a certain moment of time (step 300). Then in step 310 a system change as already explained before in connecting with Figures 1 A and 1 B happens. In operation 320 there is then calculated or determined a set of joint points and/or joint point shadows which corresponds to the combination of aspects and the base system after the system change. This results for each aspect in a set of join points and/or join point shadows which should be adapted in order to ensure that the aspects are correctly woven into the base system. Then in step 330 for a certain aspect the set resulting from step 320 is compared with the same set of joint points/joint point shadows which has been determined or calculated at the time the aspect has been woven. In other words, the sets before the system change and after the system change are compared. If in operation 340 it is then determined that the two sets differ, then it is considered that the system change is relevant for this aspect and that some adaptive action (step 350) needs to be taken in order to compensate for the system change and its influence onto the aspect. One possibility of taking the adaptive action could be to re-weave the aspect, in other words to return to operation 300 to weave the aspect once again into the now changed base system. However, another possibility instead of re-weaving (reinstalling) the aspect in the base system could also be to withdraw (deinstall or unweave) the aspect if it is determined in step 340 that the aspect now refers to joint points/joint point shadows which actually are not any more present (have no correspondence) in the base system. Then in this case the adaptive action which is taken may be the (partial or full) withdrawal or deinstallment or unweaving of this aspect.

The comparison of the sets (step 330) is carried out for each aspect, and depending on the result some aspects may be rewoven, some unwoven, and for some there will be no need to take any action at all.

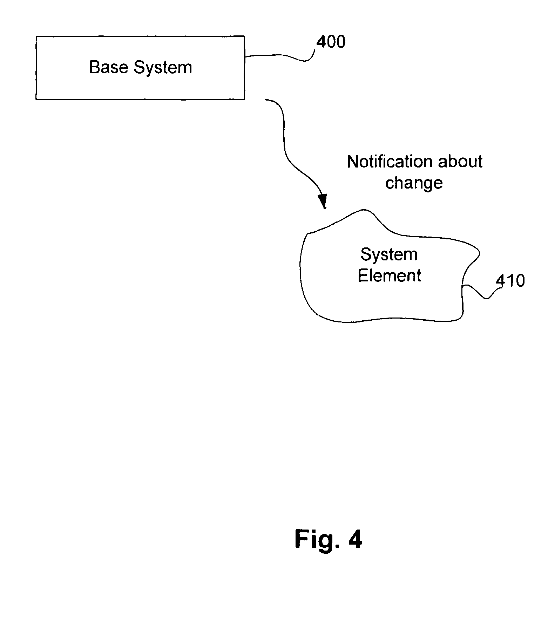

Referring now to Fig. 4A the notification about a system change according to an embodiment of the invention will be described. If the base system 400 changes, then a notification about the system change is - preferably automatically - sent to element 410. Element 410 may be any element which is capable of evaluating the system change and initiating an appropriate adaptive action. According to one specific embodiment the system element 410 may be an aspect or an advice which has registered with the base system as being interested in any base system changes so that the aspect/advice will be informed about any change in the base system. Such a registration for being notified can e.g. be implemented easily in the programming language smalltalk which provides a framework for registering with the base system in order to receive a notification in the event of a system change. The aspect/advice which has registered itself as being interested in such information is then notified, it may then re-evaluate its pointcut to determine the set of join points/join point shadows as described before already, and if a difference with the set of join points/join point shadows before the system change is found, then the aspect/advice may initiate an adaptive action, e.g. to re-weave the aspect/advice. According to an embodiment the registration of an aspect/advice for a system change may be generic or specific, such as for specific changes which may be of interest for the aspect (changes in specific parts or modules of the system).

The element 410 may, however, also be the weaver which is responsible for weaving the aspects into the base system. The weaver may then evaluate the system changes as to whether they are relevant, and if they are found to be relevant, then it may initiate the adaptive action, such as the re-weaving of one or more aspects/advices.

Element 410 may, however, also be formed by a specific system element which is responsible for receiving the notification and performing a (possibly only initial) evaluation. This element may then determine which aspects/advices might be affected by the system change, and it may then forward a message to them and/or to the weaver in order to initiate the adaptive action.

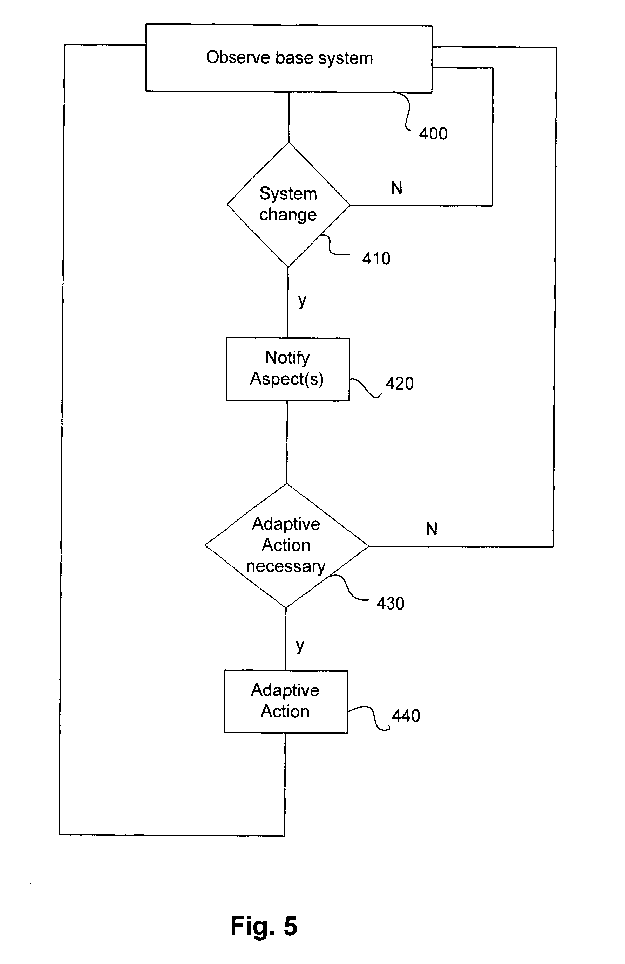

The (automatic) notification of the system element 410 may be regarded as a "push-model", however it is also possible that the system element actively polls the base system as to whether any change has happened. This may be regarded as a "pull-model". One specific embodiment of such a pull model is schematically illustrated in Fig. 5. The base system is (continuously) observed or polled (step 500) as to whether a system change happens such as the addition, removal or modification of a system element that potentially changes the set of join points/join point shadows associated with one or more aspects which have been installed or woven or composed into the base system (step 200 in Fig. 2). If in step 510 this is found to be the case, then system element 400 (cp. Fig.4) is notified. Once the system element (which may be an aspect, an advice, a specific element or the weaver) has then been notified, the evaluation (step 430) of the relevance of the system change is performed, possibly separately for each of the aspects/advices of the overall system. If the system change is found to be relevant, then the adaptive action may be taken as already explained before. The observation of the base system (steps 400 to 420) may be implemented such that in case of a system change those elements which show an interest in change notifications are automatically notified of a system change. This can be regarded as a "push model" in which aspects may register with the system for being notified about any system change, or possibly only Another possibility would be to use a so-called "pull-model" in which aspects may actively poll the base system for any system changes. Any combination of push and pull models is conceivable as well.

According to one particular embodiment th e present invention may be implemented using the computer language "Smalltalk", or one of its dialects called "Squeak". A description of aspect-oriented prog ramming with this language "Squeak" is for example described in R. Hirschfeld: AspectS - Aspect-oriented programming with Squeak, in Aksit, M.; Mezini, M.; Unland, R. (eds.): *Objects, Components, Architectures, Services, and Applications for a Networked World,* LNCS 2591, Springer-Verlag, 2003

As already mentioned, the language Squeak/Smalltalk provides an infrastructure for system changes and change notification which can be used to make comparatively easy to implement an observation for any system changes which might influence an aspect and its corresponding joint points/joint point shadows in the instrumented base system. For that purpose an advice which is associated with an aspect may register for system change events such as the addition, modification or removal of a class or a method.

If there is a change event, an system element such as an advice, an aspect, a weaver, a pointcut or any other element of the overall which has registered for notification of such a change is informed about the change. With the foregoing example the information relates only to the addition, modification, or removal of classes or methods. According to one embodiment the notification may also be carried out "right before" a system change is carried out.

As already described before, the information about the system change then triggers the evaluation of the relevance of the system change for a certain aspect, and if it is found to be relevant, then the adaptive action is carried out as described before.

For the purpose of the relevance check of a system change, according to one embodiment there is carried out a compari son of the set of joint points/joint point shadows of an aspect or advice after the system change with the set when the aspect was first installed/woven/composed or has been adapted previously in response to a previous relevant change event. In other words, the new set of join points/join point shadows after the system change is compared with the set of joint points/joint point shadows currently associated with the aspect. If the comparison leads to the result that both lists or sets are different such that the set of joint point shadows that actually are and those that actually should be associated with the aspect are different, then the adaptive action is taken.

According to one embodiment, the adaptive action to be taken in case of a system change being found relevant may consist in several actions which may be taken alternatively or in combination. Such actions may consist in installation or uninstallation of software, the activation and/or deactivation of components, it may as well consist in the load and/or unload or a change of modules, and it may comprise the re-weaving or unweaving of aspects and/or advices.

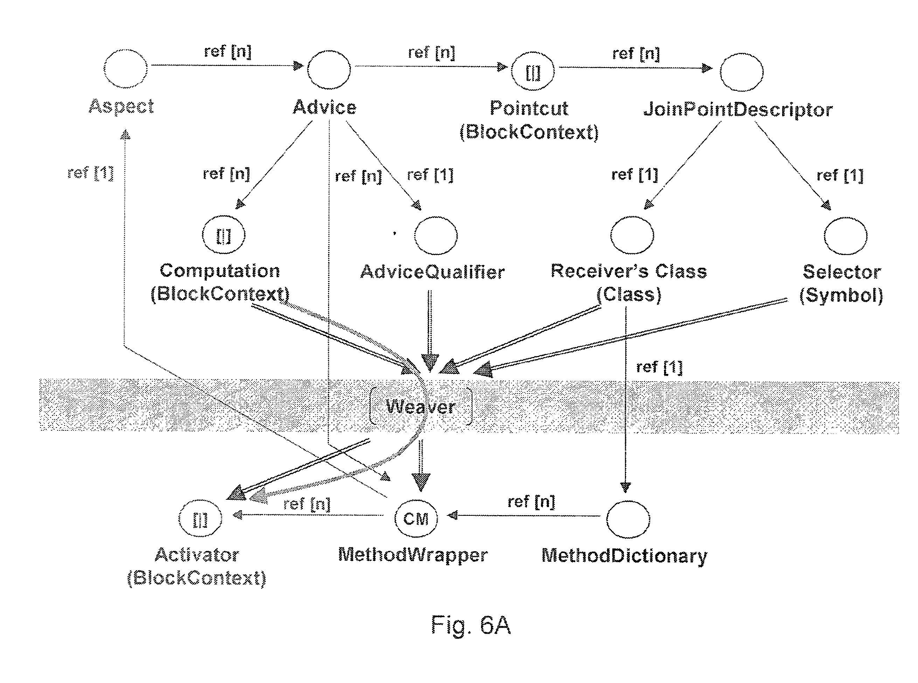

A further example of an embodiment according to the present invention will now be explained in connection with Figures 6A to 56. Figure 6A shows schematically the conventional weaving of aspects as implemented in a special language, namely in Squeak, and according to a general approach for aspect oriented programming using Squeak, said approach being named AspectS. For details of aspect oriented programming with this language one my refer to R. Hirschfeld, see above. Therein also a more detailed explanation of Fig. 6A can be found.

According to the approach of AspectS an aspect may comprise one or more advices. The advices respectively contain one or more pointcuts which themselves contain join point description to describe the join points in the base system. The join point descriptors identify selectors (methods) and (receiver's) classes (as the classes receiving an advice) implementing the selectors to define the join points. The advice further comprises one or more advice qualifiers which allows the description of dynamic attributes of a pointcut related to an advice. Furthermore the aspect comprises code for executing an advice. For that purpose Aspects uses blocks which are instances of the class BlockContext to represent code for executing an advice. The upper half of Fig. 6A schematically illustrates an aspect in the environment of Aspects, and in the middle of Fig. 6A th e weaver is schematically illustrated. The weaver weaves the aspect illustrated in th e upper half of Fig. 6A into a base system (not shown). In order to weave Aspects into a base system Aspects coordinates the placement of so-called block method wrappers into the method dictionaries of the classes of the receivers stated in the various join points advised by the aspect. This is schematically illustrated in the lower half of figure 6A. Thereby the weaver produces a composed system where the as pects are woven into the base system as shown in the bottom line of figure 6A. AspectS coordinates the placement block method wrappers into the method dictionaries of the classes of the receivers stated the various join points advised by the aspect.

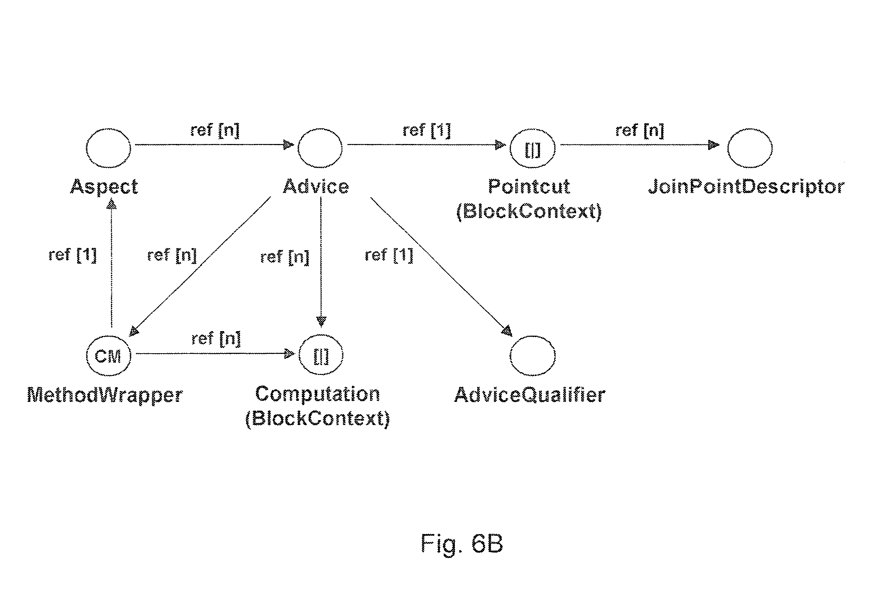

A runtime equivalent of the composed system produced by the weaver is schematically illustrated in figure 6B. Based on the advice, the pointcut and its associated join point descriptors the method wrappers are used to enable the execution of advice code by corresponding block context computation. A more detailed description of the foregoing can be found in R. Hirschfeld, see above.

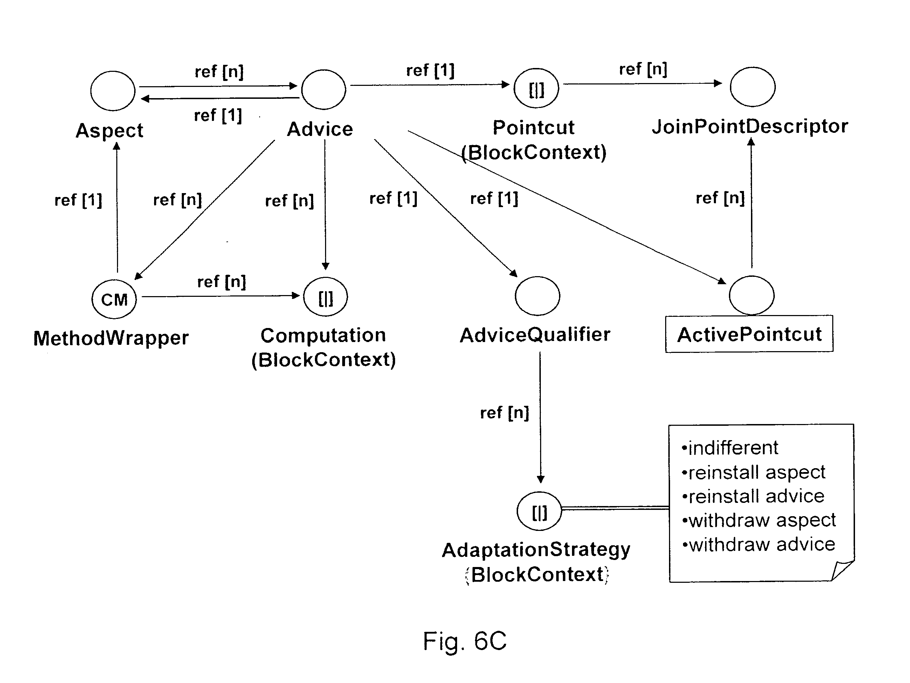

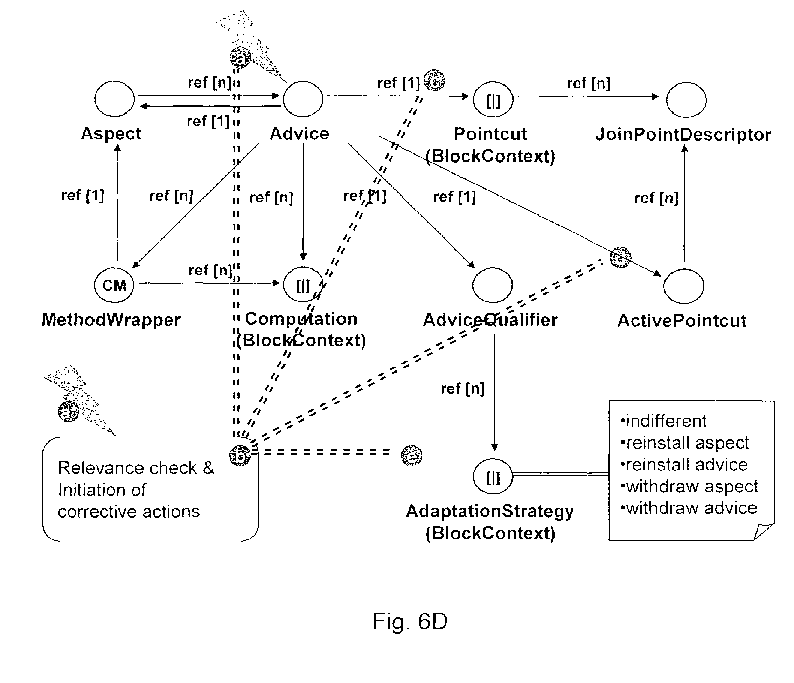

After having explained the conventional approach of Aspects, now an embodiment according to the present invention as implemented e.g. in Aspects will be described in connection with Figures 6C and 6D. Figure 6C schematically illustrates how according to the present invention the aspect and its corresponding advice are modified such that it may cope with changes in the base system. As can be seen in Fig. 6C, the advice qualifier refers to an adaptation strategy (which may also correspond to block context execution). Thereby the operation of an embodiment according to the present invention as described before may be implemented. The adaptation strategy includes the evaluation of any system change, the decision which appropriate action should be taken, and the initiation of such an action. Depending on the circumstances (evaluation of the system change), different reactions may be performed such as the re-weaving of an aspect or advice, or the withdrawal of an aspect or advice, as is schematically illustrated in Fig. 6C.

For evaluating the system change to then - if necessary - trigger an adaptive action, there is provided an "active pointcut" corresponds or reflects a set of join points or join point shadows as used and implemented in the already woven (the "active") system. After a system change happens, the (new) pointcut or a corresponding set of join points or join point shadows for the changed system is evaluated and compared with the already existing pointcut (the "active pointcut") or its corresponding set of join points or join point shadows. If there is found that a (relevant) difference exists, then the appropriate adaptive action is taken.

This is in more detail illustrated in the block diagram shown in figure 6D which in addition to Fig. 6C also shows the individual steps performed according to an embodiment of the present invention. An advice is informed about a system change (event a). Instead of an aspect or advice any other system element than an aspect or any other system element may be notified as well or alternatively, as indicated by a* in Fig. 6D The notified system element should be an element which is capable of either carrying out the relevance check and the adaptive actions, or it sh ould be capable of initiating the relevance checks and the adaptive action. Reference is here made to Fig. 4 and the corresponding description of element 410.

Then the system element may notify the aspects or advices for which the change can be relevant. Then a relevance check together with the initiation of corrective actions is performed (step b). This initiates then the calculation of the pointcut as a set of join points/join point shadows (step c). The result is then compared with the actually active point cut (step d), i. e. the point cut or its corresponding set of join points/join point shadows as it has been before the system change and as it is presently used in the (woven) system. If there is determined that any difference exists between the active pointcut and the new pointcut after the system change, then an adaptation strategy (step e) is called which leads to adaptive actions to cope with or compensate for the system change.

In the following an example of a specific implementation of an embodiment according to the present invention will be described. The exemplary implementation is based on the programming language Squeak which is a dialect of smalltalk and which is known to the persons skilled in the art. A description of aspect oriented programming concepts in Squeak may be found in R. Hirschfeld, see above.

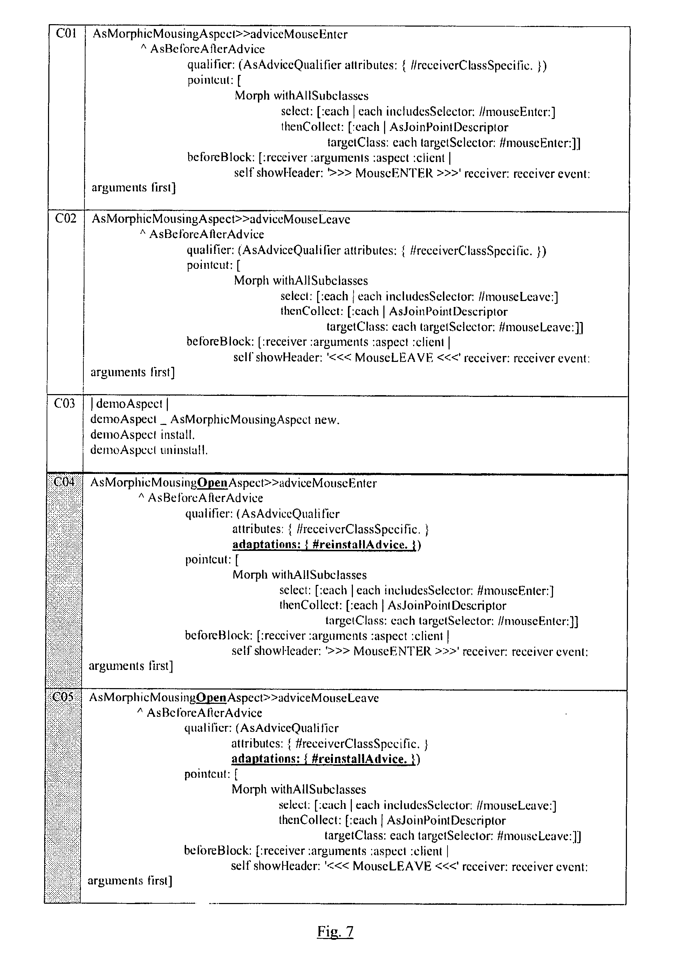

Figure 7 shows program code elements C01, C02 and C03. C01 and C02 respectively show program code for advices associated with an aspect related to the movement of the mouse, they respectively are named "adviceMouseEnter" and "adviceMouseLeave". C01 defines program code for advice to be executed when the mouse enters, and C02 shows program code for executing an advice when the mouse leaves (in case of a mouse event corresponding to mouse enter or mouse leave, respectively). The pointcut contains descriptions of the join points as those locations where in Morph (an exemplary class) and all of its subclasses the methods (or selectors) "mouseEnter" (in case of adviceMouseEnter) and of "mouseLeave" (in case of adviceMouseLeave) are implemented.

C03 shows exemplary code for installing the aspect belonging to these two advices which is called As Morphic Mousing Aspect.

The program code shown in examples C01 and C02 are conventional examples of carrying out advice for mouse enter and mouse leave events. C01 and C02 are not capable of coping with any system changes in the underlying base system.

Program code shown in block C04 now gives an example of an advice which is capable of dealing with any changes in the base system which is to be instrumented by this advice. C04 gives the example of program code for mouse enter events, and C05 gives an example of the program code for an advice related to a mouse leave event.

It can be seen that the advices contain qualifiers. Such qualifiers allow the description of dynamic attributes of a set of join points/join point shadows (e.g. described by a pointcut) related to an advice/aspect. A more detailed description of the function of such qualifiers can be found in R. Hirschfeld, see above. It can be seen here that the qualifiers of blocks C04 and C05 are different from the ones of the conventional code, namely they contain a reference to an adaptation module (referred to as "adaptations") and to a module for reinstalling the advice (referred to as "reinstall advice").

"Adaptations" refers to system elements for observing the system for system changes and for evaluating these system changes, and if the system changes are found to be relevant, then the code or the element carrying out "reinstall advice" is called in order cope with the changes. Using this qualifier the advices given in block C04 and C05 are capable of coping with any system changes by reinstalling the advice after a system change, if necessary.

According to one embodiment of the present invention there are three different entities in order to implement a system according to the present invention. One entity is the base system which comprises modules or elements forming the base system. Different and separate from the base system is the aspect model (which may also be referred to as aspect component or aspect system) which is formed by or may comprise elements or modules which implement aspects, advices, pointcuts, etceteras. Together the base system and the aspect model or aspect system form an overall system formed by the base system and the aspect model or aspect system which implements crosscutting concerns into the base system.

A third entity forming part of the overall system is an adaptation system or adaptation component for implementing the possibility to react to changes in the base system in an adaptive manner.

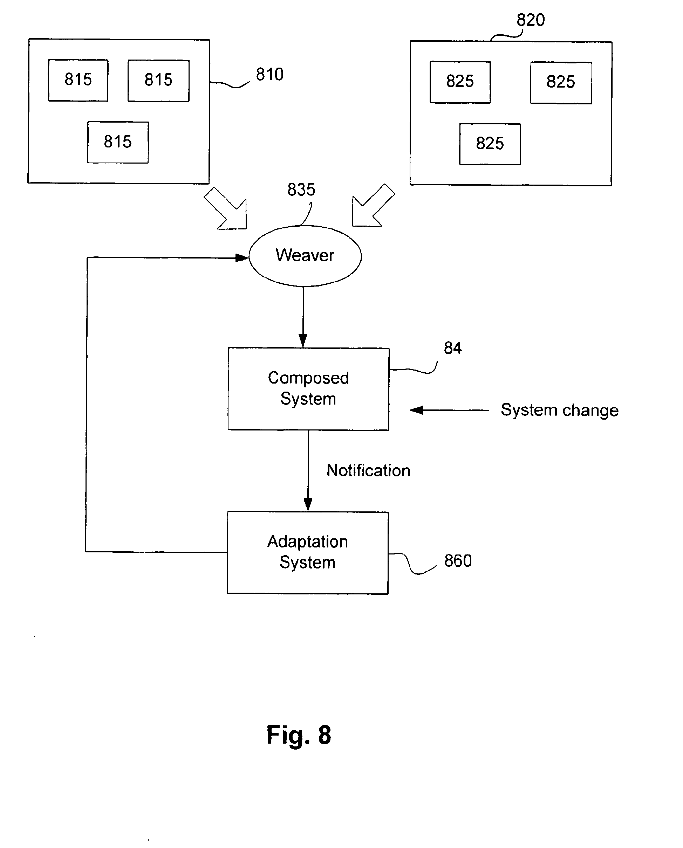

The three systems (base system, aspect system, adaptation system) are distinct and separated from each other in the sense that each system is a separate entity. Each entity according to one embodiment is built using a framework of rules and corresponding expressions (such as a programming language) for implementing or designing the entity. Each entity (base system, aspect system, adaptation system) may comprise individual modules or components. This schematically illustrated in Figure 8, where the base system is schematically illustrated as box 810. The base system here corresponds to the base system shown also in Fig. 1A, and in one embodiment it may be implemented in the computer language Squeak which is a dialect of the more general computer language Smalltalk.

In addition to the base system there exists another model as a different and separate entity, the aspect system 820 (see Fig. 8). In one embodiment it comprises aspects 825 which may comprise advice elements (not shown) and pointcuts (not shown) for selecting join point shadows in the base system 810 where the advice code should be invoked.

The aspect system is separated from the base system in the sense that it is a separate entity and may be executed and also amended independent of the base system.

Through the weaver 835 the aspects or advices defined in the aspect system are woven into the base system 810 to thereby form a composed system 840 ready for execution. According to an embodiment of the present invention any changes in the composed system (or in the base system or the aspect system) may make it necessary to adapt to such a change.

For enabling the adaptation to a system change there is provided a further component (a third component) of the overall system which is adaptation system 860. The adaptation system according to one embodiment contains components for receiving a notification about any change in the base system, and for then evaluating the change. It further comprises a component implementing an action selector which according to one embodiment is a set of rules to define which kind of system change or which kind of evaluation result should lead to which kind of adaptive action to be taken. It further comprises a component to either initiate or to carry out the adaptive action which has been found necessary according to the decision made by the action selector. The adaptation system then is capable to cause the weaver to take action in order to carry out the adaptive action. This may comprise the re-weaving of an aspect or an advice of the aspect system 820, it may also comprise the un-weaving of an aspect or an advice.

As mentioned, the base system, the aspect system and the adaptation system are different entities. These entities interact through suitable interfaces, typically through direct or indirect calls of procedures, methods or functions. This makes it possible to execute and to amend these three entities independent from each other which leads to a great flexibility.

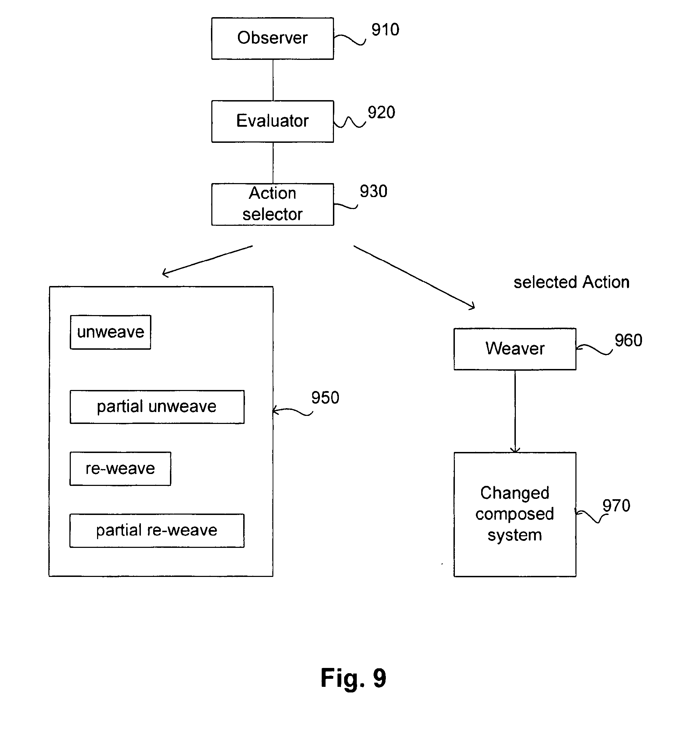

The adaptation system 900 is further explained in connection with Fig. 9. An observing component 910 receives a notification about a change in the base system. An evaluating component 920 connected to the observing component then evaluates whether the system change is found to be relevant. If this is the case, then an action selecting component 930 makes a decision or selection which adaptive action actually needs to be taken. For that purpose it may have implemented a set of rules in order to define how based on the evaluation result it is decided and which adaptive action (which may also be referred to as "adaptation strategy") is to be taken. The action selecting component then selects this action or adaptation strategy out of a pool 950 plurality of possible adaptation strategies such as full or partial re-weave, full or partial un-weave, etceteras. The selected adaptation strategy is then forwarded to be used by the weaver 960 to be executed. This results then in a changed composed model 970. It will be readily apparent that any further change in the composed model or the base system which it represents will again trigger the whole procedure, starting with observer 910.

Now the evaluation of a system change according to a further embodiment will be described in more detail. The evaluation module 920 receives a notification about a change in the base system from the observer 910. As mentioned, this is then evaluated which leads to one of several possible evaluation results. The results could for example be that after the system change now the pointcut would indicate that in case of the addition of a system module more join point shadows should be instrumented by the weaver, or in case of the removal of a system module less join point shadows should be instrumented by the weaver. This has already been explained in connection with a previous embodiment.

Based on the result of the evaluation, the action selection module 930 then decides which action (adaptation strategy) actually needs to be taken. By following certain ru les the action selector 930 decides on the adaptation strategy which is to be used. For example, if there are more joint point shadows which need to be instrumented after the system change, then the adaptation strategy which is selected out of the pool 950 of possible strategies could be that an aspect will be rewoven to the base system.

In another case the evaluation may result in that fewer join point shadows should be woven after the system change. The action which could then be selected according to the adaptation strategy is that an aspect will be un-woven from the base system. The weaver will then be informed by the adaptation module that the un-weaving is to be carried out.

It has been explained before that the base system, the aspect model and the adaptation model are three distinct entities. However, according to a specific embodiment some parts of the adaptation system can be implemented as components or parts of the aspect model. For example, the observing component 910 may be implemented as a part of an aspect or an advice, e.g. by registering the aspect/advice for system changes as described already earlier. If an aspect/advice then receives a notification about a system change, then it may either initiate the evaluation (e.g. by a function call) or it may carry it out by itself. Since the aspect/advice is associated with a specific pointcut it can be checked then whether for this specific advice/aspect the system change is relevant. This can be done by evaluating the pointcut before and after the system change as described earlier. Thereby it becomes possible to carry out the evaluation specifically for individual aspects/advices which is advantageous because a certain change in the base system is not necessarily relevant for all aspects/advices. After the evaluation which may be carried out by the aspect/advice itself of through a function or procedure call the action selector may then be called to decide on the suitable adaptation strategy. In this embodiment the observing component and the evaluation component are implemented as part of the aspect system, and the aspect system then calls the adaptation system after the evaluation in order to select and initiate the execution of the suitable adaptation strategy.

While according to the foregoing embodiment the observing module and the evaluation module (elements 910 and 920 in Fig. 9) are parts of the aspect system, according to a further embodiment these elements may instead form parts of the weaver. E.g. the weaver may be notified about a system change, and it may then evaluate the system change or initiate (through a function call) the evaluation. If the weaver itself evaluates the system change, then it may forward the evaluation result to the adaptation system. The action selector of the adaptation system which is responsible for the selection of the adaptive action then selects the appropriate adaptive action and initiates its execution.

Therefore, according to the previous embodiments the observing component 910 and the evaluator 920 shown in Fig. 9 are part of the aspect system or the weaver instead of being part of the adaptation system. Still the adaptation system, the aspect system and the base system remain to be three separate entities which communicate through direct or indirect calls.

The adaptation rules as implemented in the action selector as described before reflect a correspondence between system changes or their evaluation and an adaptive action which needs to be taken (which adaptation strategy is to be chosen). This correspondence can be defined by the programmer e.g. at the time of programming, e.g. by defining that any system change should result in a certain adaptive action to be taken (a default adaptive action). According to a further embodiment the decision about which adaptive action is to be taken may be implemented such that the decision depends on parameters which are determined during runtime, e.g. the evaluation of other modules or functions, of user inputs (during runtime), or the like. E.g. in case of the addition of a new system component the user may be asked whether this system component should also be observed, e.g. by a logging or tracking procedure, and if so, then in reaction to the positive response of the user the suitable adaptation strategy is selected which means e.g. that a re-weaving will be carried out

The selection of the adaptation strategy is typically carried out during runtime by referring to the rules implemented in the action selector, and these rules may be implemented according to the designers preferences In order to implemented the desired adaptive capabilities.

It will be readily apparent for the skilled person that while the invention has been described in connection with the foregoing embodiments, these are used for exemplary purposes only, should not be understood as limiting the invention and may be modified. In particular, it will be apparent that the present invention may be implemented in software, in hardware, or by a combination of both. Elements of the invention may be implemented in hardware, in software, or through a combination of both. While a specific programming language has been mentioned in the description, it should be understood that any suitable computer and any suitable programming language may be used to realize an implementation of the present invention. Moreover, the exemplary program code is to be understood as being used for exemplary only in order to explain the principles of the present invention and should therefore not be understood as limiting the present invention. Embodiments of the invention can be implemented in software, in hardware, or as a combination of both.

For example, according to an embodiment the apparatus for implementing an embodiment of the invention may comprise a weaver which is adapted to be able to carry out the functions described in connection with previous embodiments of the inventlon and which is installed on a computer or a computer system. According to a further embodiment the apparatus for implementing an embodiment of the invention may comprise an aspect system which is adapted to be able to carry out the functions described in connection with previous embodiments of the invention and which is installed on a computer or a computer system. According to an even further embodiment the apparatus for implementing an embodiment of the invention may be any computer or computer system having installed thereon software which enables the computer or the computer system to function as described in connection with one or more of the previously described embodiments of the invention.

## Claims

1. A method for adapting to changes in a base system in an aspect oriented programming environment comprising an aspect system for implementing aspects to be woven into said base system using a weaver, said method comprising:
in response to a change in said base system, evaluating the relevance of said change in said base system, and
if said system change is found to be relevant, taking an adaptive action to compensate for said system change,
wherein said evaluation of the relevance of said system change comprises:
determining whether after a change in the base system the join points or join point shadows before the change in the base system are different from those after the change in the base system, wherein said adaptive action is selected from a plurality of adaptive actions which comprises one or more of the following :
fully or partially re-weaving an aspect into said base system:
fully or partially unweaving an aspect.

2. The method of claim 1, further comprising:
carrying out said relevance evaluation individually for certain aspects or advices, and
taking an adaptive action individually for those of said certain aspects or advices for which said system change has been found to be relevant.

3. The method of one of claims 1 to 2 wherein said aspect oriented programming environment comprises in addition to said base system and said aspect system an adaptation system, whereas said adaptation system, said base system and said aspect system are separate entities which can be amended and executed independent of each other.

4. The method of one of claims 1 to 3, further comprising:
in case of a change in the base system, notifying an element of the overall system comprising the base system, the aspect system and the adaptation system about a change in the base system, said element being capable of one or more of the following:
initiating the evaluation of the base system change;
evaluating the base system change;
initiating an adaptive action based on said evaluation;
carrying out an adaptive action based on said evaluation.

5. The method of claim 4, wherein said element is one of the following:
an aspect;
an advice;
a weaver;
a pointcut;
any other element of the overall system.

6. The method of one of claims 4 or 5, wherein said notification of said element about a change in the base system comprises:
a) automatically notifying said element in case of a change in the base system by sending a corresponding notification to said element; and/or
b) polling said base system by said element to observe said base system as to whether any change in the base system occurs.

7. The method of one of claims 1 to 6, wherein said evaluation of a base system change comprises:
determining a set of all join points and/or join point shadows for a certain aspect and/or advice after said system change.

8. The method of one of claims 1 to 7, further comprising:
comparing said set of join points and/or join point shadows determined after said system change with a corresponding set before said system change, and
if said sets differ, taking an adaptive action to compensate for said system change.

9. The method of one of claims 1 to 8, further comprising:
providing a plurality of possible adaptive actions as adaptation strategies which may be taken; and
depending on the evaluation, selecting one of more of said plurality of adaptive actions.

10. The method of one of claims 1 to 9, wherein said relevance evaluation further comprises:
evaluating a set of rules according to which it is decided based on said evaluation result which of said adaptive actions is to be taken.

11. The method of one of claims 1 to 10, wherein said relevance evaluation takes into account events or actions occurring during runtime, said events or interactions being one or more of the following:
user interaction;
evaluation of functions or module during runtime.

12. The method of one of claims 1 to 11, wherein said base system change comprises one or more of the following:
addition, removal or modification of an element of the base system.

13. A computer program comprising computer executable code for carrying out a method according to one of claims 1 to 12.

14. A data carrier comprising or embodying a computer program according to claim 13.

15. An apparatus for adapting to changes in a base system in an aspect oriented programming environment comprising an aspect system for implementing aspects to be woven into said base system using a weaver, said apparatus comprising:
means for in response to a change in said base system, evaluating the relevance of said change in said base system, and
means for if said evaluation said system change is found to be relevant, taking an adaptive action to compensate for said system change, wherein said means for evaluation of the relevance of said system change comprises:
means for determining whether after a change in the base system the join points or join point shadows before the change in the base system are different from those after the change in the base system, and wherein said adaptive action is selected from a plurality of adaptive actions which comprises one or more of the following:
fully or partially re-weaving an aspect into said base system ;
fully or partially unweaving an aspect.

16. The apparatus of claim 15 further comprising:
means for carrying out said relevance evaluation individually for certain aspects or advices, and
means for taking an adaptive action individually for those of said certain aspects or advices for which said system change has been found to be relevant.

17. The apparatus of one of claims 15 or 16 further comprising:
means for carrying out a method according to one of claims 1 to 13.

## Patentansprüche

1. Verfahren zum Anpassen an Veränderungen in einem Basissystem in einer aspekt-orientierten Programmierumgebung, welche ein Aspekt-System zum Implementieren von Aspekten aufweist, die in das Basissystem unter Verwendung eines Weavers eingewebt werden sollen, wobei das Verfahren aufweist:
Evaluieren der Relevanz der Veränderung in dem Basissystem in Reaktion auf eine Veränderung in dem Basissystem, und
falls die Systemveränderung für relevant befunden wird, Vornehmen einer adaptiven Handlung, um die Systemveränderung zu kompensieren,
wobei die Evaluierung der Relevanz der Systemveränderung aufweist:
Ermitteln, ob nach einer Veränderung in dem Basissystem die Joint Points oder Joint Point Shadows vor der Veränderung in dem Basissystem unterschiedlich von denen nach der Veränderung in dem Basissystem sind, wobei die adaptive Handlung aus einer Mehrzahl von adaptiven Handlungen ausgewählt wird, welche eine oder mehr der folgenden aufweist:
vollständiges oder teilweises erneutes Weben eines Aspekts in das Basissystem;
vollständiges oder teilweises Entweben eines Aspekts.

2. Verfahren nach Anspruch 1, welches ferner aufweist:
Zuführen der Relevanzevaluierung individuell für bestimmte Aspekte oder Advices, und
Vornehmen einer adaptiven Handlung individuell für die der bestimmten Aspekte oder Advices, für die die Systemveränderung für relevant befunden wurde.

3. Verfahren nach einem der Ansprüche 1 bis 2, wobei die aspektorientierte Programmierumgebung zusätzlich zu dem Basissystem und dem Aspektsystem ein Adaptionssystem umfasst, wobei das Adaptionssystem, das Basissystem und das Aspektsystem separate Entitäten sind, die unabhängig voneinander geändert und ausgeführt werden können.

4. Verfahren nach einem der Ansprüche 1 - 3, welches ferner aufweist:
im Falle einer Veränderung in dem Basissystem, Benachrichtigen eines Elements des Gesamtsystems, welches das Basissystem, das Aspektsystem und das Adaptionssystem umfasst, über eine Veränderung in dem Basissystem, wobei das Element zu einem oder mehreren der folgenden in der Lage ist:
Initiieren der Evaluierung der Basissystemveränderung;
Evaluierung der Basissystemveränderung, Initiieren einer adaptiven Handlung basierend auf der Evaluierung;
Ausführen einer adaptiven Handlung basierend auf der Evaluierung.

5. Verfahren nach Anspruch 4, wobei das Element eines der folgenden ist:
ein Aspekt;
ein Advice;
ein Weber;
ein Point Cut;
irgendein anderes Element des Gesamtsystems.

6. Verfahren nach einem der Ansprüche 4 oder 5, wobei die Benachrichtigung des Elements über eine Veränderung in dem Basissystem aufweist:
a) automatisches Benachrichtigen des Elements im Falle einer Veränderung in dem Basissystem durch Senden einer entsprechenden Benachrichtigung zu dem Element; und/oder
b) Abfragen des Basissystems durch das Element, um das Basissystem dahin gehend zu überwachen, ob irgendeine Veränderung in dem Basissystem auftritt.

7. Verfahren nach einem der Ansprüche 1 bis 6, wobei die Evaluierung einer Basissystemveränderung aufweist:
Bestimmen eines Satzes von allen Joint Points und/oder Joint Point Shadows für einen bestimmten Aspekt und/oder Advice nach der Systemveränderung.

8. Verfahren nach einem der Ansprüche 1 bis 7, welches ferner aufweist:
Vergleichen des Satzes von Joint Points und/oder von Joint Point Shadows, die nach der Systemveränderung ermittelt wurden, mit einem entsprechenden Satz vor der Systemveränderung, und
falls die Sätze sich unterscheiden, vornehmend einer adaptiven Handlung, um die Systemveränderung zu kompensieren.

9. Verfahren nach einem der Ansprüche 1 bis 8, welches ferner aufweist:
Vorsehen einer Mehrzahl von möglichen adaptiven Handlungen als Adaptionsstrategien, die ergriffen werden können, und
abhängig von der Evaluierung, Auswählen von einer oder mehreren der Mehrzahl von adaptiven Handlungen.

10. Verfahren nach einem der Ansprüche 1 bis 9, wobei die Relevanzevaluierung ferner aufweist:
Evaluieren eines Satzes von Regeln in Übereinstimmung mit denen basierend auf dem Evaluierungsresultat entschieden wird, welche der adaptiven Handlungen vorzunehmen ist.

11. Verfahren nach einem der Ansprüche 1 - 10, wobei die Relevanzevaluierung Ereignisse oder Aktionen berücksichtigt, die während der Laufzeit auftreten, wobei die Ereignisse oder Interaktionen eines oder mehrere der folgenden sind:
Benutzerinteraktion;
Evaluierung von Funktionen oder Modulen während der Laufzeit.

12. Verfahren nach einem der Ansprüche 1 bis 11, wobei die Basissystemveränderung eines oder mehrere der folgenden aufweist:
Hinzufügen, Entfernen oder Modifikation eines Elements des Basissystems.

13. Computerprogramm mit Computer ausführbaren Code zum Ausführen eines Verfahrens gemäß einem der Ansprüche 1 bis 12.

14. Datenträger, welcher ein Computerprogramm gemäß Anspruch 13 aufweist oder verkörpert.

15. Vorrichtung zum Anpassen an Veränderungen in einem Basissystem in einer aspekt-orientierten Programmierumgebung, welche ein Aspekt-System zum Implementieren von Aspects aufweist, die in das Basissystem unter Verwendung eines Weavers eingewebt werden sollen, wobei die Vorrichtung aufweist:
eine Einrichtung zum Evaluieren der Relevanz der Veränderung in dem Basissystem in Reaktion auf eine Veränderung in dem Basissystem, und
eine Einrichtung zum Vornehmen einer adaptiven Handlung, falls die Systemveränderung für relevant befunden wird, um die Systemveränderung zu kompensieren,
wobei die Einrichtung zum Evaluierung der Relevanz der Systemveränderung aufweist:
eine Einrichtung zum Ermitteln, ob nach einer Veränderung in dem Basissystem die Joint Points oder Joint Point Shadows vor der Veränderung in dem Basissystem unterschiedlich von denen nach der Veränderung in dem Basissystem sind, wobei die adaptive Handlung aus einer Mehrzahl von adaptiven Handlungen ausgewählt wird, welche eine oder mehr der folgenden aufweist:
vollständiges oder teilweises erneutes Weben eines Aspekts in das Basissystem;
vollständiges oder teilweises Entweben eines Aspekts.

16. Vorrichtung nach Anspruch 15, welche ferner aufweist:
eine Einrichtung zum Ausführen der Relevanzevaluierung individuell für bestimmte Aspekte oder Advices, und
eine Einrichtung zum Vornehmen einer adaptiven Handlung individuell für diejenigen der bestimmten Aspekte oder Advices, für die die Systemveränderung für relevant befunden wurde.

17. Vorrichtung nach einem der Ansprüche 15 oder 16, welche ferner aufweist:
eine Einrichtung zum Ausführen eines Verfahrens gemäß einem der Ansprüche 1 bis 13.

## Revendications

1. Procédé pour adapter des changements dans un système de base dans un aspect orienté environnement de programmation comprenant un système d'aspects pour implémenter des aspects à tisser dans ledit système de base à l'aide d'un tisseur, ledit procédé comprenant les étapes consistant à :
en réponse à un changement dans ledit système de base, évaluer la pertinence dudit changement dans ledit système de base, et
si ledit changement dans le système s'avère être pertinent, prendre une mesure adaptative pour compenser ledit changement dans le système,
dans lequel ladite évaluation de la pertinence dudit changement dans le système comprend l'étape consistant à :
déterminer si après un changement dans le système de base, les points de jonction ou les ombres des points de jonction avant le changement dans le système de base sont différents de ceux après le changement dans le système de base, dans lequel ladite mesure adaptative est sélectionnée parmi une pluralité de mesures adaptatives qui comprend une ou plusieurs des étapes suivantes :
retisser entièrement ou partiellement un aspect dans ledit système de base ;
détisser entièrement ou partiellement un aspect.

2. Procédé selon la revendication 1, comprenant en outre les étapes consistant à :
exécuter ladite évaluation de pertinence individuellement pour certains aspects ou conseils, et
prendre une mesure adaptative individuelle pour ceux desdits aspects ou conseils pour lesquels ledit changement de système s'est avéré être pertinent.

3. Procédé selon l'une quelconque des revendications 1 à 2, dans lequel ledit aspect orienté environnement de programmation comprend en plus dudit système de base et dudit système d'aspects un système adaptatif, alors que ledit système adaptatif, ledit système de base et ledit système d'aspects sont des entités séparées qui peuvent être amendées et exécutées indépendamment les unes des autres.

4. Procédé selon l'une quelconque des revendications 1 à 3, comprenant en outre les étapes consistant à :
en cas de changement dans le système de base, notifier un élément du système global comprenant le système de base, le système d'aspects et le système adaptatif à propos d'un changement dans le système de base, ledit élément étant capable d'exécuter une ou plusieurs des étapes suivantes :
lancer l'évaluation du changement dans le système de base ;
évaluer le changement dans le système de base ;
lancer une mesure adaptative basée sur ladite évaluation ;
exécuter une mesure adaptative basée sur ladite évaluation.

5. Procédé selon la revendication 4, **caractérisé en ce que** ledit élément est l'un des éléments suivants :
un aspect ;
un conseil ;
un tisseur ;
une coupe ponctuelle ;
tout autre élément du système global.

6. Procédé selon l'une quelconque des revendications 4 ou 5, dans lequel ladite notification dudit élément à propos d'un changement dans le système de base comprend les étapes consistant à :
a) notifier automatiquement ledit élément en cas de changement dans le système de base en envoyant une notification correspondante au dit élément ; et/ou
b) inviter ledit système de base par le biais dudit élément à observer ledit système de base pour savoir si un changement survient dans le système de base.

7. Procédé selon l'une quelconque des revendications 1 à 6, dans lequel ladite évaluation d'un changement dans le système de base comprend les étapes consistant à :
déterminer un ensemble de tous les points de jonction et/ou ombres des points de jonction pour un certain aspect et/ou conseil après ledit changement dans le système.

8. Procédé selon l'une quelconque des revendications 1 à 7, comprenant en outre les étapes consistant à :
comparer ledit ensemble de points de jonction et/ou ombres de points de jonction déterminé après ledit changement dans le système avec un ensemble correspondant avant ledit changement dans le système, et
si lesdits ensembles diffèrent, prendre une mesure adaptative pour compenser ledit changement dans le système.

9. Procédé selon l'une quelconque des revendications 1 à 8, comprenant en outre les étapes consistant à :
fournir une pluralité de mesures adaptatives possibles comme stratégies d'adaptation qui peuvent être prises ; et
en fonction de l'évaluation, sélectionner une ou plusieurs de ladite pluralité de mesures adaptatives.

10. Procédé selon l'une quelconque des revendications 1 à 9, dans lequel ladite évaluation de pertinence comprend en outre l'étape consistant à :
évaluer un ensemble de règles selon lequel il est décidé, en fonction du résultat de l'évaluation, laquelle des mesures adaptatives doit être prise.

11. Procédé selon l'une quelconque des revendications 1 à 10, dans lequel ladite évaluation de pertinence prend en compte les événements ou mesures survenant pendant l'exécution, lesdits événements ou interactions étant un ou plusieurs des éléments suivants :
interaction utilisateur ;
évaluation des fonctions ou module pendant l'exécution.

12. Procédé selon l'une quelconque des revendications 1 à 11, dans lequel ledit changement dans le système de base comprend une ou plusieurs des étapes suivantes :
ajout, suppression ou modification d'un élément du système de base.

13. Programme informatique comprenant un code exécutable par ordinateur pour exécuter un procédé selon l'une des revendications 1 à 12.

14. Porteuse de données comprenant ou incorporant un programme informatique selon la revendication 13.

15. Appareil pour adapter les changements dans un système de base dans un aspect orienté environnement de programmation comprenant un système d'aspect pour implémenter les aspects à tisser dans ledit système de base à l'aide d'un tisseur, ledit appareil comprenant :
un moyen pour, en réponse à un changement dans ledit système de base, évaluer la pertinence dudit changement dans ledit système de base, et
un moyen pour, si ladite évaluation dudit changement dans le système s'avère être pertinente, prendre une mesure adaptative pour compenser ledit changement dans le système, dans lequel ledit moyen d'évaluation de la pertinence dudit changement dans le système comprend :
un moyen pour déterminer si, après un changement dans le système de base, les points de jonction ou ombres des points de jonction avant le changement dans le système de base sont différents de ceux après le changement dans le système de base, et dans lequel ladite mesure adaptative est sélectionnée parmi une pluralité de mesures adaptatives qui comprend une ou plusieurs des étapes suivantes :
retisser entièrement ou partiellement un aspect dans ledit système de base ;
détisser entièrement ou partiellement un aspect.

16. Appareil selon la revendication 15, comprenant en outre :
un moyen pour exécuter ladite évaluation de pertinence individuellement pour certains aspects ou conseils, et
un moyen pour prendre une mesure adaptative individuellement pour ceux desdits certains aspects ou conseils pour lesquels ledit changement dans le système s'est avéré être pertinent.

17. Appareil selon l'une quelconque des revendications 15 ou 16, comprenant en outre :
un moyen pour exécuter un procédé selon l'une quelconque des revendications 1 à 13.
